# EUROPÄISCHE PATENTSCHRIFT

(11) **EP 4 185 781 B1**
(45) Veröffentlichungstag und Bekanntmachung des Hinweises auf die Patenterteilung: **21.01.2026**
(21) Anmeldenummer: 21748848.5
(22) Anmeldetag: 22.07.2021
(51) Int. Cl.: F16B 25/00, B23P 19/06

(54) **SCHRAUBE, VERWENDUNG, VERFAHREN UND SYSTEM**
SCREW, USE, METHOD AND SYSTEM
VIS, UTILISATION, PROCÉDÉ ET SYSTÈME

(30) Priorität: 23.07.2020 DE 102020209328
(43) Veröffentlichungstag der Anmeldung: 31.05.2023
(73) Patentinhaber: Arnold Umformtechnik GmbH & Co. KG, 74670 Forchtenberg-Ernsbach (DE)
(72) Erfinder: WERTHWEIN, Bernd, 74670 Sindringen (DE); JAKOB, Thomas, 34292 Ahnatal (DE)
(74) Vertreter: Patentanwälte Ruff, Wilhelm, Beier, Dauster & Partner mbB
(86) Internationale Anmeldenummer: PCT/EP2021/070531
(87) Internationale Veröffentlichungsnummer: WO 2022/018204

(56) Entgegenhaltungen:
- CN-A- 106 313 074
- CN-A- 108 489 361
- CN-A- 109 227 104
- DE-A1- 102014 211 093
- DE-C1- 3 909 725
- ES-T3- 2 224 727
- US-A- 4 102 182
- ESKA: "Gewindefurchende Schrauben für kostengünstige Direktverschraubungen", 14 June 2016 (2016-06-14), XP055620062, Retrieved from the Internet <URL:http://web.archive.org/web/20160614235539if_/http://www.eska.net:80/fileadmin/user_upload/User-Advanced/PDF/ESKA_Gewindefurchende_Schrauben.pdf> [retrieved on 20190909]

## Beschreibung

Die Erfindung betrifft eine Schraube mit einem Schraubenkopf und einem Schraubenschaft, wobei der Schraubenkopf mit einer Antriebsausbildung und der Schraubenschaft wenigstens abschnittsweise mit einem Gewinde versehen ist, wobei der Schraubenschaft einen zylindrischen Halteabschnitt und einen sich zu einem Schraubenende hin verjüngenden Endabschnitt aufweist, wobei im Halteabschnitt das Gewinde als Normgewinde, insbesondere als metrisches Gewinde, ausgebildet ist und wobei der Halteabschnitt einen kreisrunden Querschnitt aufweist. Die Erfindung betrifft auch die Verwendung einer erfindungsgemäßen Schraube. Die Erfindung betrifft weiter ein System und ein Verfahren zum Eindrehen einer erfindungsgemäßen Schraube.

Es sind einerseits Schrauben zum Einschrauben in vorhandene Innengewinde bekannt. Solche Schrauben weisen einen Schraubenkopf und einen Schraubenschaft auf, wobei der Schraubenkopf mit einer Antriebsausbildung und der Schraubenschaft wenigstens abschnittsweise mit einem Gewinde versehen ist, wobei der Schraubenschaft einen zylindrischen Halteabschnitt und einen sich zu einem Schraubenende hin verjüngenden Endabschnitt aufweist, wobei im Halteabschnitt das Gewinde als Normgewinde, insbesondere als metrisches Gewinde, ausgebildet ist. Der sich verjüngende Endabschnitt erleichtert das Einführen in ein vorhandenes Innengewinde.

Daneben sind sogenannte Furchschrauben bekannt. Furchschrauben dienen dazu, in ein vorhandenes Loch, beispielsweise einen Blechdurchzug, ein Gewinde einzufurchen. Hierzu ist ein sich verjüngender Endabschnitt der Schraube mit einem Furchgewinde versehen. Im zylindrischen Halteabschnitt ist dann ein Haltegewinde vorgesehen, das im Hinblick auf einen optimalen Halt der Schraube in dem Werkstück optimiert ist.

Aus der deutschen Offenlegungsschrift DE 10 2014 211 093 A1 ist eine loch- und gewindeformende Schraube mit einem, über die gesamte Länge des Schafts in Form eines Dreiecks mit abgerundeten Ecken und konvexen Seiten gebildeten Querschnitt des Schraubenschafts bekannt. Das Gewinde der Schraube soll als Rundgewinde ausgebildet sein.

Aus der Veröffentlichung ESKA "Gewindefurchende Schrauben für kostengünstige Direktverschraubungen" ist eine Schraube ESKA TriloMET bekannt, die in einem Bereich unterhalb des Schraubenkopfs einen kreisrunden Querschnitt und im Bereich einer Furchspitze einen trilobularen Querschnitt aufweisen soll. Das Gewinde der Schraube ist über die gesamte Länge des Schafts als Trapezgewinde ausgebildet.

Aus der spanischen Veröffentlichung einer Übersetzung ES 2 224 727 T3 ist eine Furchschraube mit abschnittsweise polygonalem und abschnittsweise kreisrundem Querschnitt bekannt. Das Gewinde der Schraube soll über die gesamte Länge des Schafts als Trapezgewinde ausgebildet sein.

Aus der deutschen Patentschrift DE 39 09 725 C1 ist eine loch- und gewindeformende Schraube mit einem polygonalen Querschnitt bekannt. Die Schraube weist eine gewindelose abgerundete Spitze auf.

Aus der US-Patentschrift US 4,102,182 ist ein Verfahren zum Messen des Drehwinkels und des Drehmoments bekannt.

Aus der chinesischen Offenlegungsschrift CN 109 227 104 A ist ein Verfahren zum Steuern des Drehmoments beim Eindrehen einer Schraube bekannt.

Mit der Erfindung soll eine Schraube, eine Verwendung einer Schraube, ein System zum Eindrehen einer Schraube und ein Verfahren zum Eindrehen einer Schraube verbessert werden.

Erfindungsgemäß sind hierzu eine Schraube mit den Merkmalen von Anspruch 1, eine Verwendung einer erfindungsgemäßen Schraube mit den Merkmalen von Anspruch 12, ein System zum Eindrehen einer erfindungsgemäßen Schraube mit den Merkmalen von Anspruch 13 und ein Verfahren mit den Merkmalen von Anspruch 14 vorgesehen.

Die Erfindung beruht auf der Erkenntnis, dass es überraschenderweise möglich ist, sowohl in Löcher mit vorhandenem Innengewinde als auch in Löcher ohne Innengewinde die gleichen Schrauben einzuschrauben. Dadurch ergeben sich überraschende Vorteile in Bezug auf die Lagerhaltung, die Dokumentation und die Prozesssicherheit von Einschraubprozessen. Speziell wird hierfür eine Schraube bereitgestellt, die sich als Furchschraube eignet und die einen sich ausgehend vom Halteabschnitt verjüngenden Endabschnitt aufweist, wobei der Endabschnitt mit wenigstens zwei Gewindegängen versehen ist, die als Furchgewinde ausgebildet sind, wobei der Endabschnitt wenigstens im Bereich des Furchgewindes einen polylobularen Querschnitt aufweist und wobei der Schraubenschaft im Halteabschnitt und im Endabschnitt gehärtet ist. Durch den gehärteten und mit einem polylobularen Querschnitt versehenen Endabschnitt, der wenigstens zwei Gewindegänge eines Furchgewindes aufweist und der sich ausgehend vom zylindrischen Halteabschnitt verjüngt, ist die Schraube als Furchschraube geeignet und es ist möglich, mit dieser Schraube ein Gewinde in ein vorhandenes Loch ohne Innengewinde einzufurchen. Im Rahmen der Erfindung ist es vorteilhaft, wenn zwei bis sechs Gewindegänge eines Furchgewindes vorgesehen sind. Da das Gewinde im zylindrischen Halteabschnitt, der einen kreisrunden Querschnitt aufweist, als Normgewinde ausgebildet ist, kann die Schraube auch in ein vorhandenes Norminnengewinde eingeschraubt werden. Unabhängig davon, ob ein Loch kein Innengewinde aufweist und infolgedessen mit der Schraube ein Gewinde eingefurcht werden muss oder ob ein Loch ein Innengewinde aufweist, können also die gleichen Schrauben verwendet werden.

Dies erleichtert zunächst die Lagerhaltung, da sowohl in Löcher mit Innengewinde als auch in Löcher ohne Innengewinde die gleichen Schrauben eingeschraubt werden. Nachteilig ist hierbei selbstverständlich, dass die erfindungsgemäßen Schrauben in der Herstellung teurer sind als konventionelle Normgewindeschrauben. Überraschenderweise können diese Kostennachteile aber dadurch ausgeglichen und sogar überkompensiert werden, dass eine vereinfachte Lagerhaltung möglich ist, dass die erfindungsgemäßen Schrauben in sehr großen Stückzahlen produziert werden können und dass die bei Einschraubprozessen erforderliche Dokumentation vereinfacht und vor allem auch die Prozesssicherheit beim Einschrauben wesentlich verbessert wird. Denn durch die Verwendung der gleichen Schrauben für das Einschrauben in Löcher ohne Innengewinde und Löcher mit Innengewinde werden Verwechslungen vermieden. Schrauben sind in der Regel vergleichsweise kleine Bauteile und konventionelle Schrauben mit Normgewinden unterscheiden sich in technischer Hinsicht zwar deutlich, in optischer Hinsicht aber nur geringfügig von Furchschrauben zum Einfurchen von Gewinden. Verwechslungen sind daher möglich, da beide Schrauben sehr ähnliche Außenabmessungen aufweisen. Dies kann sogar dazu führen, dass ein an und für sich für Furchschrauben vorgesehener Einschraubautomat nicht erkennt, dass er mit konventionellen Schrauben mit Normgewinde befüllt ist. Erst beim Produktionsprozess, also beim Einschrauben, tritt möglicherweise der Fehler auf, dass die Schrauben mit Normgewinde beim Einfurchen eines Gewindes abreißen. Deutlich kritischer wäre allerdings der Fall, wenn die Schrauben nicht beim Einfurchen des Gewindes abbrechen und dadurch dann ein Werkstück produziert würde, bei dem Schrauben mit nicht ausreichender Festigkeit verbaut wurden. Auch die Dokumentation eines Einschraubprozesses wird vereinfacht, da immer die gleichen Schrauben verwendet werden. Dadurch, dass Verwechslungen unterschiedlicher Schrauben nicht mehr auftreten können, wird die Prozesssicherheit erheblich verbessert.

In Weiterbildung der Erfindung ist der Endabschnitt als Ogivalspitze ausgebildet, wobei die Ogivalspitze insbesondere abgeplattet oder abgerundet ist.

Der Endabschnitt weist vorzugsweise die Form einer Ogive, mit anderen Worten eines Spitzbogens, auf, dessen Spitze abgeplattet oder abgerundet sein kann. Der Übergang von der Ogivalspitze in den zylindrischen Halteabschnitt kann dabei tangential, also ohne sichtbare oder spürbare Kante erfolgen oder auch in der Weise, dass sich in der Kontur der Schraube eine Kante ausbildet und somit die Ogivalspitze nicht tangential in den zylindrischen Halteabschnitt einläuft.

In Weiterbildung der Erfindung ist der Endabschnitt als Kegelstumpfabschnitt ausgebildet, insbesondere mit abgerundetem Ende.

In Weiterbildung der Erfindung endet der Endabschnitt an einer Endfläche.

Bei der erfindungsgemäßen Schraube ist es nicht erforderlich, eine Spitze auszubilden, da die erfindungsgemäße Schraube zum Einschrauben in vorhandene Löcher in einem Werkstück vorgesehen ist.

In Weiterbildung der Erfindung beträgt ein Durchmesser der Endfläche senkrecht zur Schraubenlängsachse gesehen zwischen 70% und 80%, insbesondere 75%, des Durchmessers des Halteabschnitts.

Bei solchen Abmessungen, insbesondere für die vorzugsweise eingesetzte Ogivalzone, ist zum einen eine vereinfachte Lochfindung beim automatischen Verarbeiten der erfindungsgemäßen Schrauben ermöglicht und auch das Einfurchen eines Gewindes kann in zuverlässiger und prozesssicherer Weise erfolgen.

In Weiterbildung der Erfindung weist der Endabschnitt eine abgerundete Suchspitze auf.

Auf diese Weise kann die Schraube in sehr einfacher Weise in vorhandene Bohrungen eingeführt werden, auch wenn beispielsweise Bauteiltoleranzen zu erwarten sind.

In Weiterbildung der Erfindung ist die Suchspitze gewindelos ausgebildet.

Dies erleichtert das Finden von toleranzbehafteten Bohrungen.

In Weiterbildung der Erfindung weist die Suchspitze einen kreisrunden Querschnitt auf.

Auch dies erleichtert das Einführen der Schraube in bereits vorhandene Bohrungen. Beispielsweise können die ersten Umdrehungen dazu dienen, die Schraube noch vor dem Eingriff des Furchgewindes korrekt relativ zu einer glatten Bohrung oder einer Bohrung mit vorhandenem Gewinde zu positionieren.

In Weiterbildung der Erfindung hat der Endabschnitt ausschließlich im Bereich des Furchgewindes einen polylobularen Querschnitt.

Auf diese Weise kann ein Gewinde gefurcht werden, so dass die Schraube auch für glatte Bohrungen ohne Innengewinde geeignet ist. Durch den Halteabschnitt werden aber sehr hohe Auszugskräfte erreicht. Der ebenfalls im Querschnitt runde Suchabschnitt, also der Bereich, der zwischen dem Furchgewinde und dem freien Ende der Schraube liegt, erleichtert das Einführen der Schraube in vorhandene Bohrungen mit oder ohne Innengewinde.

Gemäß der Erfindung ist das Furchgewinde im Endabschnitt als Rundgewinde ausgebildet.

Auf diese Weise wird das Einfurchen eines Gewindes erleichtert, wie auch das Ansetzen der Schraube. Bei dem Rundgewinde können sowohl die Gewindespitze als auch die Gewindetäler rund ausgeformt sein, sowohl die Gewindegänge als auch der Kern weisen also ein Rundprofil auf.

In Weiterbildung der Erfindung weist der Endabschnitt neben dem Furchgewinde weitere Gewindegänge auf, die als Rundgewinde ausgebildet sind.

Beim Eindrehen der Schraube in ein vorhandenes Innengewinde wird das Finden des Innengewindes dadurch erleichtert. Das Rundgewinde kann auch hier abgerundete Gewindespitzen und abgerundete Täler aufweisen, so dass ein Rundprofil an den Gewindegängen und im Kern vorliegt.

Gemäß der Erfindung ist das Normgewinde im Halteabschnitt als Trapezgewinde ausgebildet.

Auf diese Weise werden sehr gute Auszugskräfte erreicht. Das Haltegewinde ist mit anderen Worten als Spitzgewinde mit abgeplatteten Tälern und Spitzen ausgebildet. Der Winkel zwischen den Gewindeflanken beträgt typischerweise 60°.

In Weiterbildung der Erfindung weist das Gewinde auf dem Schraubenschaft in einer Seitenansicht eine kontinuierliche, gedachte Hüllkurve bis zum freien Ende des Schraubenschafts auf.

Mit anderen Worten ragt das Furchgewinde nicht über die Hüllkurve hinaus, sondern auch im Bereich der radial am weitesten vorstehenden Bereiche des mit polylobularem Querschnitt ausgeführten Furchgewindes berührt die Gewindespitze die kontinuierliche Hüllkurve lediglich und ragt nicht über diese hinaus.

In Weiterbildung der Erfindung ist wenigstens der Endabschnitt zusätzlich partiell, insbesondere induktiv, gehärtet.

Durch partielle und insbesondere induktive Härtung lässt sich wenigstens der Endabschnitt so ausbilden, dass er den mechanischen und thermischen Belastungen beim Einfurchen eines Gewindes standhält. Die größten mechanischen und thermischen Belastungen treten im Bereich des Endabschnitts auf, es genügt daher in der Regel, den Endabschnitt induktiv partiell zu härten. Insbesondere wird lediglich ein Bereich des Endabschnitts ausgehend von der Oberfläche bis zu einer vordefinierten Tiefe partiell zusätzlich gehärtet. Es ist nicht erforderlich, den kompletten Querschnitt des Endabschnitts partiell zusätzlich zu härten, da erfindungsgemäß auch der Halteabschnitt bereits gehärtet ist.

In Weiterbildung der Erfindung ist die Schraube auf die Festigkeitsklassen 8.8, 10.9, 12.9 oder bis in den ultrahochfesten Bereich gehärtet.

Diese Festigkeitsklassen haben sich für die erfindungsgemäße Schraube als äußerst vorteilhaft herausgestellt. Darüber hinaus kann der gewindefurchende Endabschnitt partiell zusätzlich gehärtet sein. Das Härteverfahren für die erfindungsgemäßen Schrauben kann bainitisch oder einsatzgehärtet mit nachfolgendem Anlassen sein. Insbesondere ein Bainit-Gefüge weist eine hohe Festigkeit und eine sehr hohe Zähigkeit auf. Bainit-Gefüge entsteht bei kohlenstoffhaltigem Stahl durch ein spezielles Abkühlen im Salzbad. Bainit-Gefüge hat sich für die erfindungsgemäße Schraube als äußerst vorteilhaft erwiesen.

In Weiterbildung der Erfindung beträgt eine Zugfestigkeit der Schraube wenigstens 800 N/mm².

Beispielsweise wird die erfindungsgemäße Schraube als sogenannte 8.8-Schraube ausgebildet, vorzugsweise wird die erfindungsgemäße Schraube als 10.9 Schraube ausgebildet.

In Weiterbildung der Erfindung beträgt eine 0,2 % Dehngrenze der Schraube wenigstens 640 N/mm² insbesondere mindestens 900 N/mm², insbesondere mindestens 1040 N/mm² .

Beispielsweise wird die Schraube mit einer Festigkeit 8.8 oder einer größeren Festigkeit ausgebildet, insbesondere bis in den ultrahochfesten Bereich.

In Weiterbildung der Erfindung ist wenigstens der letzte vollständige Gewindegang des Furchgewindes vor dem Ende des Endabschnitts am Übergang zum Halteabschnitt hinsichtlich der Gewindemaße ausgebildet wie das Normgewinde im Halteabschnitt.

Mit Ausnahme des unterschiedlichen Querschnitts, da der Halteabschnitt einen kreisrunden Querschnitt aufweist und der Endabschnitt einen polylobularen Querschnitt hat, entspricht der letzte Gewindegang des Furchgewindes hinsichtlich der Gewindemaße, also hinsichtlich des Außendurchmessers und des Kerndurchmessers, dem Normgewinde im Halteabschnitt. Im Unterschied zu üblichen Furchgewinden, die einen geringfügig größeren Durchmesser aufweisen als Normgewinde, wird bei der erfindungsgemäßen Schraube das Furchgewinde nicht mit Übermaß gegenüber dem Normgewinde im Halteabschnitt ausgeführt. Dies hat den ganz erheblichen Vorteil, dass die erfindungsgemäße Schraube völlig problemlos in vorhandene Innengewinde, die der Norm entsprechen, eingeschraubt werden kann. Überraschenderweise hat sich auch herausgestellt, dass trotzdem das Furchgewinde nicht mit Übermaß gegenüber dem Normgewinde im Halteabschnitt hergestellt ist, sich die erfindungsgemäße Schraube auch in Löcher ohne Innengewinde, in denen mittels des Furchgewindes also zunächst ein Gewinde gefurcht werden muss, eingeschraubt werden kann. Die durch das Material und die Abmessungen vorgegebenen maximalen Einschraubmomente können eingehalten werden. Die Gewindemaße betreffen dabei den Außendurchmesser und den Kerndurchmesser sowie insbesondere den Flankendurchmesser, die Steigung des Gewindes sowie den Flankenwinkel. Aufgrund des polylobularen Querschnitts des Endabschnitts müssen der Außendurchmesser, der Kerndurchmesser und der Flankendurchmesser jeweils als größter Durchmesser des letzten Gewindegangs des Furchgewindes gemessen werden. Lediglich dann, wenn der polylobulare Querschnitt als Gleichdick ausgeführt ist, können der Außendurchmesser, der Kerndurchmesser und der Flankendurchmesser des letzten Gewindegangs des Furchgewindes unabhängig von der Winkellage gemessen werden. Das Normgewinde im Halteabschnitt kann beispielsweise als metrisches Gewinde oder Zollgewinde ausgeführt sein. Im Falle eines metrischen Gewindes M5 beträgt der Außendurchmesser des Normgewindes im Halteabschnitt zwischen 4,790 mm und 5,0 mm, vergleiche DIN 13-20: 2000-08/M5-4H-6G-6E. Ein übliches Furchgewinde zum Furchen eines metrischen M5-Gewindes würde üblicherweise mit einem Außendurchmesser oder einem Umkreis um einen polygonalen Querschnitt herum zumindest mit einem Abschnitt des Toleranzbereichs größer sein als das nominelle Nennmaß des Außendurchmessers, also größer als 5,0 mm. Gemäß der Erfindung wird das Furchgewinde beziehungsweise wenigstens der letzte Gewindegang des Furchgewindes am Übergang zwischen dem Endabschnitt und dem Halteabschnitt dahingegen mit einem Außendurchmesser entsprechend dem Normgewinde, also zwischen 4,790 mm und 5,0 mm ausgeführt. 4.790 mm entspricht dem Mindestmaß für M5-Schrauben nach der Toleranzklasse 6E.

Die Erfindung betrifft auch die Verwendung einer erfindungsgemäßen Schraube in einem ersten Verwendungsfall als gewindefurchende Schraube oder in einem zweiten Verwendungsfall als Schraube zum Eindrehen in vorhandene Innengewinde.

Indem also die erfindungsgemäßen Schrauben einerseits als gewindefurchende Schrauben und andererseits als Schrauben zum Eindrehen in vorhandene Innengewinde eingesetzt werden können, können die gleichen Schrauben für unterschiedliche Anwendungsfälle eingesetzt werden. Dies erleichtert die Lagerhaltung, ermöglicht große Stückzahlen der Schrauben, erleichtert die Dokumentation des Einschraubprozesses und vermeidet vor allem Fehler beim Herstellen eines Werkstücks, die durch Verwechseln unterschiedlicher Schrauben entstehen können. Durch die erfindungsgemäße Verwendung der erfindungsgemäßen Schrauben sowohl als gewindefurchende Schrauben als auch als Schrauben zum Eindrehen in vorhandene Innengewinde können damit möglicherweise sicherheitsrelevante Fehler beim Herstellen von Werkstücken vermieden werden und der Nachteil der höheren Herstellkosten der erfindungsgemäßen Schrauben gegenüber konventionellen Schrauben mit Normgewinde kann ausgeglichen oder sogar überkompensiert werden.

Mit der Erfindung kann ein maximales Einschraubmoment für eine erfindungsgemäße Schraube ausgewählt werden, wobei zunächst geprüft wird, ob in einem vorhandenen Loch in einem oder mehreren Werkstücken ein Innengewinde vorhanden ist oder nicht, und dann bei Vorhandensein eines Innengewindes ein erstes maximales Einschraubmoment ausgewählt wird und dann, wenn kein Innengewinde vorhanden ist, ein zweites maximales Einschraubmoment ausgewählt wird, wobei das erste Einschraubmoment kleiner ist als das zweite Einschraubmoment. Auf diese Weise können die erfindungsgemäßen Schrauben sowohl zum Furchen eines Innengewindes als auch zum Einschrauben in ein vorhandenes Innengewinde verwendet werden. Indem beim Einschrauben in ein vorhandenes Innengewinde das maximale Einschraubmoment niedriger gewählt wird als beim Einfurchen eines Gewindes, kann sicher festgestellt werden, ob sich die Schraube beim Einschrauben in ein vorhandenes Innengewinde verklemmt oder sonstige Unregelmäßigkeiten auftreten. Mit der Erfindung können auch Einschraubmomente bei einer gewindefurchenden Verschraubung reduziert werden, wobei dies ebenso für eine Schraubenverbindung mit vorhandenem Mutterngewinde anwendbar ist. Bei einem vorhandenen Mutterngewinde, das vorzugsweise metrisch ist, tritt beim Einschrauben mit einer metrischen Schraube nur ein sehr geringes Einschraubmoment auf. Beim Einschrauben üblicher gewindefurchender Schrauben in ein vorhandenes Mutterngewinde können erhöhte Einschraubmomente auftreten, da die üblichen gewindefurchenden Schrauben über das vollständige Gewinde oder zumindest über einen Abschnitt des Gewindes ein Übermaß des Außendurchmessers aufweisen. Mit der erfindungsgemäßen Schraube kann also das Einschraubmoment reduziert werden. Generell besteht beim Einschrauben einer gewindefurchenden Schraube in ein vorhandenes Mutterngewinde das Risiko des Cross Threadings, mit anderen Worten das Risiko der Furchung eines zweiten Gewindeganges, wodurch das Mutterngewinde beschädigt oder zerstört wird. Das Risiko des Cross Threadings ist durch die Furchzone an der gewindefurchenden Schraube bedingt. Wenn eine gewindefurchende Schraube in ein vorhandenes Gewinde eingeschraubt wird, kann in der Praxis dann, wenn erhöhte Einschraubmomente auftreten, nicht unterschieden werden, ob diese infolge des Cross Threadings oder infolge eines Übermaßes der gewindefurchenden Schraube und damit durch ein Nachfurchen des Gewindes auftreten. Mit der erfindungsgemäßen Schraube ist sichergestellt, dass dann, wenn die Schraube direkt in das vorhandene Mutterngewinde eingesetzt ist, mit anderen Worten also das Mutterngewinde gefunden wurde und kein Cross Threading auftritt, die Einschraubmomente auf einem extrem niedrigen Niveau und in der Regel nahe null liegen. Dadurch ist es möglich, mit der erfindungsgemäßen Schraube eventuelle Fehlverschraubungen im Falle des Cross Threadings zu detektieren, da das Cross Threading mit erhöhten Einschraubmomenten einhergeht. Die Prozesssicherung bei Verwendung der erfindungsgemäßen Schraube ist dadurch erheblich größer. Dadurch kann ein wesentlicher Beitrag zur Qualitätsverbesserung im Falle der Montage von gewindefurchenden Schrauben in vorhandene, vorzugsweise metrische, Mutterngewinde geleistet werden. Dadurch kann die Strategie der Reduzierung der Teilevielfalt durch Einsatz der erfindungsgemäßen universellen Furchschraube sowohl für gewindefurchende Verschraubungen als auch für Verschraubungen in vorhandene Gewinde in der Praxis wesentlich besser umgesetzt werden.

Das der Erfindung zugrunde liegende Problem wird auch durch ein System zum Eindrehen einer erfindungsgemäßen Schraube und umfassend eine erfindungsgemäße Schraube gelöst, bei dem Mittel zum Feststellen vorgesehen sind, ob ein vorhandenes Loch ein Innengewinde aufweist oder nicht, und bei dem Einstellmittel vorgesehen sind, um in Abhängigkeit davon, ob ein vorhandenes Loch ein Innengewinde aufweist oder nicht, das Einschrauben der Schraube mit unterschiedlichem maximalem Einschraubmoment zu bewirken.

Das der Erfindung zugrunde liegende Problem wird auch durch ein Verfahren zum Eindrehen einer erfindungsgemäßen Schraube gelöst, bei dem die Schritte Erfassen eines Einschraubmoments während des Einschraubens in ein vorhandenes Mutterngewinde und Detektieren einer nicht korrekten Verschraubung, wenn das Einschraubmoment einen vordefinierten Wert übersteigt, vorgesehen sind.

Im Unterschied zu konventionellen Furchschrauben kann bei den erfindungsgemäßen Schrauben unterschieden werden, ob die Schraube in ein vorhandenes Innengewinde korrekt eingeschraubt wird oder ob das sogenannte Cross-Threading auftritt, dass also die Schraube sich ein zusätzliches Gewinde in das bereits vorhandene Gewinde einschneidet. Bei üblichen Furchschrauben liegt das Einschraubmoment beim Einschrauben in vorhandene Innengewinde sehr hoch, da beispielsweise der Außendurchmesser konventioneller Furchschrauben größer ist als der Außendurchmesser von Schrauben, die zum Eindrehen in vorhandene Innengewinde vorgesehen sind. Aus diesem Grund kann bei konventionellen Furchschrauben nicht oder in jedem Fall nicht sicher zwischen dem korrekten Einschrauben in ein vorhandenes Innengewinde und dem Fall des Cross-Threadings unterschieden werden. Die erfindungsgemäßen Schrauben lassen sich nun mit vergleichsweise geringem Einschraubmoment in ein vorhandenes Innengewinde einschrauben. Tritt der Fall des Cross-Threadings auf, so äußert sich dies in einem erheblich größeren Einschraubmoment, beispielsweise in einem bis zu 10-fach erhöhten Einschraubmoment gegenüber dem korrekten Einschrauben. Dies kann erfasst und detektiert werden und dadurch kann eine nicht korrekte Verschraubung erkannt werden und gegebenenfalls die Verschraubung dann repariert werden.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine Seitenansicht einer erfindungsgemäßen Schraube,
- Fig. 2: ein erstes Werkstück mit einem vorhandenen Loch mit abschnittsweisem Innengewinde,
- Fig. 3: die Schraube der Fig. 1 im eingeschraubten Zustand in das Werkstück der Fig. 2,
- Fig. 4: ein weiteres Werkstück mit einem vorhandenen Loch ohne Innengewinde,
- Fig. 5: die Schraube der Fig. 1 im eingeschraubten Zustand in das Werkstück der Fig. 4,
- Fig. 6: eine schematische Darstellung eines erfindungsgemäßen Systems zum Einschrauben einer Schraube,
- Fig. 7: ein weiteres Werkstück mit einem vorhandenen Loch ohne Innengewinde,
- Fig. 8: ein weiteres Werkstück mit einem vorhandenen Loch ohne Innengewinde,
- Fig. 9: das Werkstück der Fig. 8 mit einer eingeschraubten erfindungsgemäßen Schraube,
- Fig. 10: eine abschnittsweise Darstellung einer erfindungsgemäßen Schraube gemäß einer weiteren Ausführungsform der Erfindung von schräg hinten, wobei die Schraube ohne einen Schraubenkopf dargestellt ist,
- Fig. 11: die Schraube der Fig. 10 von schräg vorne,
- Fig. 12: die Schraube der Fig. 10 von vorne, vom freien Ende her gesehen,
- Fig. 13: die Schraube der Fig. 10 in einer Seitenansicht,
- Fig. 14: eine abschnittsweise Darstellung einer erfindungsgemäßen Schraube gemäß einer weiteren Ausführungsform von schräg hinten, wobei die Schraube ohne Schraubenkopf dargestellt ist,
- Fig. 15: die Schraube der Fig. 14 von schräg vorne,
- Fig. 16: die Schraube der Fig. 14 von vorne, wobei der Blick des Betrachters auf das freie Ende der Schraube gerichtet ist,
- Fig. 17: eine Seitenansicht der Schraube der Fig. 14 in einer ersten Drehstellung um eine Mittellängsachse der Schraube,
- Fig. 18: eine weitere Seitenansicht der Schraube, wobei die Schraube gegenüber der Darstellung der Fig. 17 um 90° um die Mittellängsachse gedreht wurde,
- Fig. 19: eine Schnittansicht der Schraube der Fig. 14,
- Fig. 20: eine weitere Schnittansicht der Schraube der Fig. 14, wobei die Schnittebene gegenüber der Darstellung der Fig. 19 um 90° gedreht wurde,
- Fig. 21: einen Querschnitt der Schraube der Fig. 14 im Bereich der gewindelosen Suchspitze,
- Fig. 22: den Querschnitt der Fig. 21 von vorne,
- Fig. 23: einen weiteren Querschnitt der Schraube der Fig. 14 im Bereich des Furchgewindes,
- Fig. 24: den Querschnitt der Fig. 23 von vorne,
- Fig. 25: einen weiteren Querschnitt der Schraube der Fig. 14 im Bereich des Haltegewindes,
- Fig. 26: den Querschnitt der Fig. 25 von vorne und
- Fig. 27: beispielhafte Drehmoment-Drehwinkel-Kurven beim Einschrauben einer erfindungsgemäßen Schraube.

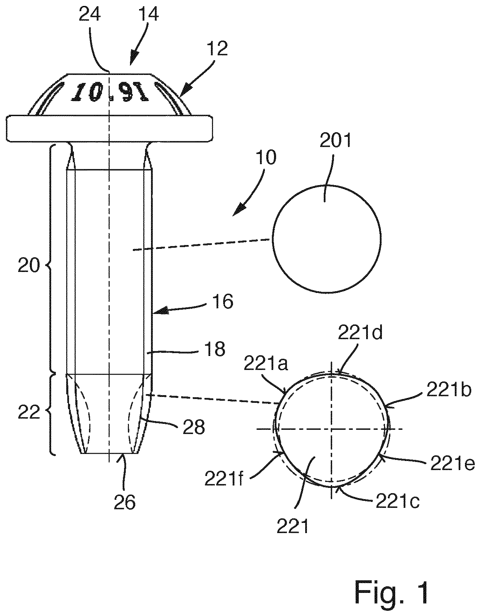

Fig. 1 zeigt eine erfindungsgemäße Schraube 10 gemäß einer bevorzugten Ausführungsform der Erfindung. Die Schraube weist einen Schraubenkopf 12 mit einer in Fig. 1 nicht erkennbaren Antriebsausbildung 14 und einen Schraubenschaft 16 auf. Der Schraubenschaft ist im Wesentlichen über seine gesamte Länge mit einem Gewinde 18 versehen, das in Fig. 1 lediglich schematisch dargestellt ist.

Der Schraubenschaft weist einen zylindrischen Halteabschnitt 20 und einen sich in einer Richtung vom Schraubenkopf 12 weg an den Halteabschnitt 20 anschließenden Endabschnitt 22 auf. Der Endabschnitt 22 verjüngt sich in einer Richtung vom Halteabschnitt 20 weg.

Der Halteabschnitt 20 ist mit einem Normgewinde versehen, beispielsweise mit einem metrischen Gewinde. Der Endabschnitt 22 ist mit wenigstens fünf Gewindegängen eines Furchgewindes versehen. Eine Gewindeflankenhöhe im Endabschnitt 22 entspricht am Übergang vom Halteabschnitt 20 in den Endabschnitt 22 der Gewindehöhe des Normgewindes im Halteabschnitt 20 und sinkt dann zum freien Ende des Endabschnitts 22 hin ab. Die Gewindehöhe am freien Ende des Endabschnitts 22 beträgt beispielsweise etwa 50 % der Gewindehöhe des Endabschnitts 22 am Übergang zum Halteabschnitt 22.

Der Endabschnitt 22 weist die Form einer abgeplatteten Ogivalspitze auf. Die in Fig. 1 sichtbare Außenkontur des Endabschnitts 22 ist durch einen Kreisbogen gebildet, der einerseits tangential in die zylindrische Außenkontur des Halteabschnitts 20 übergeht und andererseits an der senkrecht zu einer Mittellängsachse 24 der Schraube 10 angeordneten Endfläche 26 endet. Der Endabschnitt weist darüber hinaus einen in Fig. 1 rechts neben dem Endabschnitt 22 angedeuteten polylobularen Querschnitt 221 auf, wohingegen der Halteabschnitt 20 einen zylindrischen Querschnitt 201 hat. Bei der dargestellten Ausführungsform ist der Querschnitt 221 des Endabschnitts 22 mit drei abgerundeten Ecken 221a, 221b, 221c und drei konvex gekrümmten und die abgerundeten Ecken miteinander verbindenden Seitenkanten 221d, 221e, 221f versehen. Dies kann auch als Trilobularität bezeichnet werden. Bei der dargestellten Ausführungsform ist der Querschnitt 221 als Gleichdick ausgeführt. Der Außendurchmesser des Querschnitts 221 ist somit unabhängig von der Winkellage immer gleich. Im Rahmen der Erfindung kann der polylobulare Querschnitt 221 des Endabschnitts 22 aber auch einen sich abhängig von der Winkellage ändernden Außendurchmesser haben.

An der Oberseite des Schraubenkopfs 12 sind die Ziffern 10.9 zu erkennen. Die Ziffern 10.9 geben eine Schraubenfestigkeit an. Eine Zugfestigkeit der Schraube beträgt wenigstens 1.000 N/mm² und eine 0,2 % Dehngrenze der Schraube 10 beträgt wenigstens 900 N/mm². Im Rahmen der Erfindung stellen solche sogenannten 10.9 Schrauben die bevorzugte Ausführungsform dar.

Im Endabschnitt 22 ist die Schraube 10 induktiv gehärtet. Dies ist in der Fig. 1 schematisch mittels eines in gestrichelten Linie 28 angedeuteten gehärteten Bereichs 28 angedeutet. Durch die induktive Härtung wird ausgehend von der Oberfläche des Endabschnitts 22 das vollständige Furchgewinde sowie zur Mittellängsachse 24 hin ein sich geringfügig über den Grund des Gewindes hinaus erstreckender Bereich 28 gehärtet. Ebenfalls induktiv gehärtet wird ein Anfangsbereich des Halteabschnitts 20. Dadurch kann sichergestellt werden, dass die wenigstens fünf Gewindegänge des Furchgewindes im Endabschnitt 22 vollständig gehärtet sind. Speziell muss ein vollständig ausgeformter Gewindegang innerhalb des mittels Induktion gehärteten Bereichs 28 liegen, so dass das Gewinde im Halteabschnitt 20 keine Furchfunktion mehr übernehmen muss.

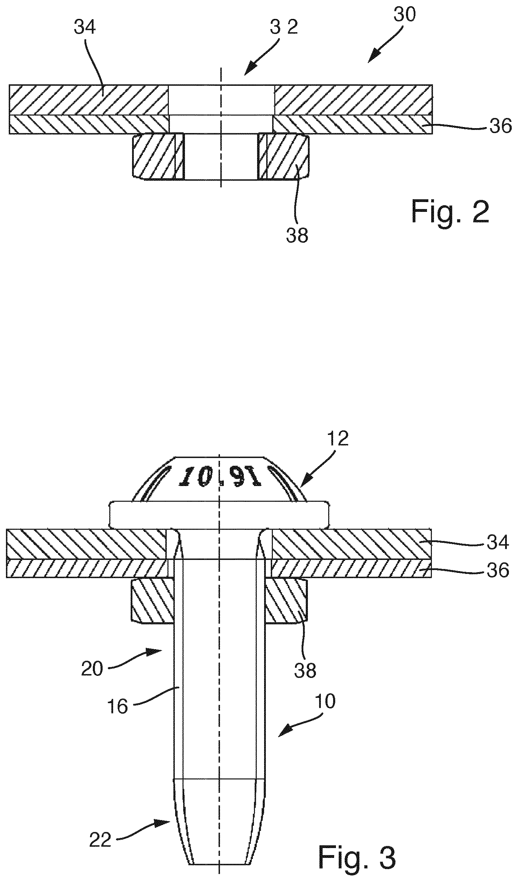

Fig. 2 zeigt abschnittsweise ein Werkstück 30 mit einem Loch 32. Das Werkstück besteht aus einem Deckblech 34, das im Bereich des Lochs 32 gelocht ist, und einem zweiten Blech 36, das mit einer Einpressmutter 38 versehen ist. Die Einpressmutter 38 ist schematisch dargestellt und insbesondere ist nicht dargestellt, wie die Einpressmutter 38 in das Blech 36 eingepresst und an diesem verankert ist. Durch Vorsehen der Einpressmutter 38 weist das Loch 32 im Bereich der Einpressmutter 38 ein vorhandenes Innengewinde auf.

Fig. 3 zeigt die Schraube 10 der Fig. 1 im eingeschraubten Zustand. Eine Unterseite des Schraubenkopfs 12 liegt auf der Oberseite des Deckblechs 34 auf und das Gewinde 16 im Halteabschnitt 20 greift in das Innengewinde der Einpressmutter 38 ein. Das Deckblech 34 und das Blech 36 werden mittels der Schraube 10 und der Einpressmutter 38 somit gegeneinander vorgespannt.

Beim Einschrauben der Schraube 10 erleichtert der sich verjüngende Endabschnitt 22 das Einführen der Schraube 10 in das Loch 32 und erleichtert auch das Ansetzen und Einschrauben des Gewindes 16 in das Innengewinde der Einpressmutter 38.

Die erfindungsgemäße Schraube 10 kann somit in vorhandene Innengewinde, hier in ein vorhandenes Innengewinde einer Einpressmutter 38, problemlos eingeschraubt werden. Da das Gewinde 16 im Halteabschnitt 20 als Normgewinde ausgebildet ist, greift das Gewinde 16 sicher in das Gewinde der Einpressmutter 38 ein.

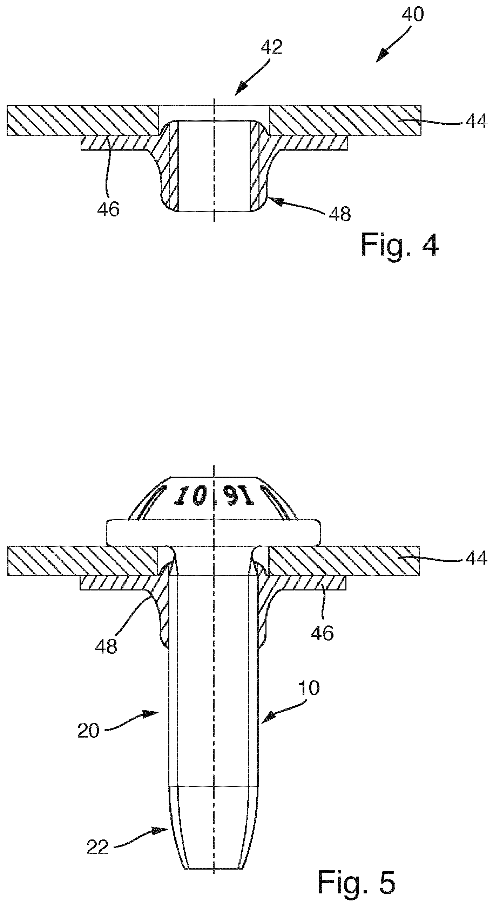

Fig. 4 zeigt ein zweites Werkstück 40 mit einem Loch 42, das nicht mit einem Innengewinde versehen ist. Das Werkstück 40 weist wieder ein Deckblech 44 und ein unterhalb des Deckblechs 44 angeordnetes weiteres Blech 46 auf, wobei das Deckblech 44 und das weitere Blech 46 lediglich abschnittsweise dargestellt sind. Das weitere Blech 46 ist mit einem Durchzug 48 versehen, der eine Verlängerung des Lochs 42 bildet.

Fig. 5 zeigt die Schraube 10 der Fig. 1 im eingeschraubten Zustand in das Loch 42. Nach dem Ansetzen der Schraube 10, so dass der Endabschnitt 22 abschnittsweise in das Loch 42 eingeführt ist und am in Fig. 4 oberen Ende des Durchzugs 48 aufsitzt, wird die Schraube 10 in Drehung versetzt und das Furchgewinde im Endabschnitt 22 wird in das Loch 42 im Durchzug 48 eingedreht und erzeugt dabei durch seine Furchwirkung ein Innengewinde im Durchzug 48. Der Endabschnitt weist wenigstens fünf Gewindegänge eines Furchgewindes auf, die, wie erläutert wurde, vom Beginn des Endabschnitts 22 bis zum Übergang in den zylindrischen Halteabschnitt 20 eine ansteigende Gewindeflankenhöhe aufweisen. Während des Einschraubens des Endabschnitts 22 in den Durchzug 48 wird somit das Innengewinde in dem Endabschnitt 48 so weit ausgebildet, dass es einem genormten Innengewinde entspricht, das zu dem Normgewinde im zylindrischen Halteabschnitt 20 passt.

Der im Querschnitt polylobular ausgebildete Endabschnitt 22 verringert dabei das Einschraubmoment beim Einfurchen des Gewindes, da immer nur die abgerundeten Ecken des polylobularen Querschnitts an der Innenwand des Durchzugs 48 anliegen bzw. nur im Bereich dieser abgerundeten Ecken eine erhöhte Anpresskraft nach außen auf die Innenwand des Durchzugs 48 ausgeübt wird. Sobald der Einführabschnitt 22 bis zu seinem Ende, also dem Übergang zum Halteabschnitt 20, in den Durchzug 48 eingeschraubt ist, steht an dem in Fig. 5 oberen Ende des Durchzugs 48 wenigstens ein Gewindegang eines vollständig ausgebildeten Innengewindes zur Verfügung, dessen Abmessungen der Norm entsprechen und damit an das Normgewinde im Halteabschnitt 20 angepasst sind. Der Halteabschnitt 20 kann infolgedessen in den Durchzug 48 eingeschraubt werden. Im Zustand der Fig. 5 ist die Schraube 10 vollständig in den Durchzug 48 eingeschraubt und spannt dadurch das Blech 46 und das Deckblech 44 gegeneinander vor.

Die erfindungsgemäße Schraube 10 kann somit auch zum Einfurchen eines Gewindes in ein Loch 42 ohne vorhandenes Innengewinde verwendet werden.

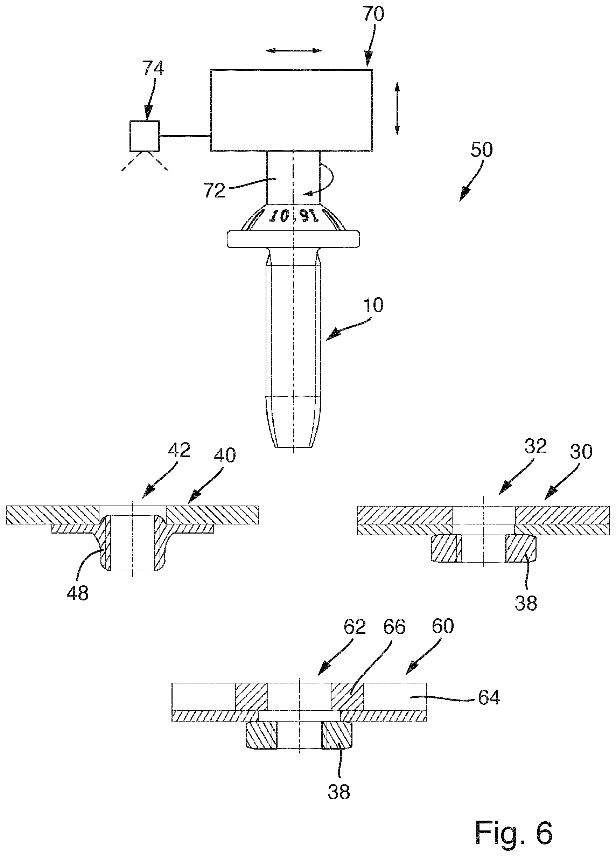

Fig. 6 zeigt ein System 50 zum Einschrauben von erfindungsgemäßen Schrauben 10 in unterschiedliche Werkstücke 30, 40 und 60. Das Werkstück 30 wurde bereits anhand der Fig. 2 erläutert, das Werkstück 40 wurde bereits anhand der Fig. 4 erläutert. Das Werkstück 60 unterscheidet sich vom Werkstück 30 der Fig. 2 nur dadurch, dass anstelle des Deckblechs eine Kunststoffplatte 64 vorgesehen ist und das Loch 62 durch eine in die Kunststoffplatte 64 eingesetzte Messinghülse 66 begrenzt ist. Die Kunststoffplatte 64 ist oberhalb des Blechs 36 mit der Einpressmutter 38 angeordnet.

Das System 50 ist dafür vorgesehen, die gleichen Schrauben 10 in die unterschiedlichen Werkstücke 30, 40, 60 einzuschrauben. Die Schraube 10 ist an einem schematisch dargestellten Einschraubautomaten 70 angeordnet, dessen Welle 72 in der Einschraubrichtung in Drehung versetzt werden kann. Dabei kann ein maximales Einschraubmoment vorgegeben werden. Der Einschraubautomat 70 kann sich in Längsrichtung der Schraube sowie senkrecht hierzu bewegen, mit anderen Worten also in den drei Raumrichtungen, um die Schraube 10 in eines der Löcher 32, 42, 62 einzuführen. Der Einschraubautomat ist mit einer Kamera 74 versehen, die auf die Werkstücke 30, 40, 62 ausgerichtet ist und die über wenigstens eine Datenleitung mit einer nicht dargestellten Steuereinheit in dem Einschraubautomat 70 verbunden ist. Mittels der Kamera 74 oder eines anderen, hierfür geeigneten Sensors, kann festgestellt werden, ob in einem jeweiligen Loch 32, 42, 62 ein Innengewinde vorhanden ist oder nicht. Abhängig davon, ob festgestellt wird, ob ein Innengewinde vorhanden ist oder nicht, wird ein maximales Einschraubmoment zum Einschrauben der Schraube 10 mittels des Einschraubautomaten 70 eingestellt.

Das Loch 32 des ersten Werkstücks 30 weist im Bereich der Einpressmutter 38 ein Innengewinde auf. Beim Einschrauben der Schraube 10 in das Loch 32 wird infolgedessen ein erstes Einschraubmoment eingestellt. Dieses erste Einschraubmoment wird beispielsweise so gewählt, dass es dem üblichen Einschraubmoment beim Einschrauben von Normgewindeschrauben in vorhandene Innengewinde entspricht.

Beim Einschrauben der Schraube 10 in das Loch 42, das kein Innengewinde aufweist, auch nicht im Bereich des Blechdurchzugs 48, wird ein zweites maximales Einschraubmoment eingestellt, das ausreichend ist, um in dem Durchzug 48 ein Gewinde zu furchen. Das zweite maximale Einschraubmoment ist höher als das erste maximale Einschraubmoment.

In dem Loch 62 des dritten Werkstücks 60 ist im Bereich der Einpressmutter 38 wieder ein Innengewinde vorhanden. Beim Einschrauben der Schraube 10 in das Loch 62 wird infolgedessen wieder das erste maximale Einschraubmoment eingestellt, das niedriger ist als das zweite maximale Einschraubmoment.

Bei Verwendung des erfindungsgemäßen Systems 50 zum Einschrauben von gleichen Schrauben 10 in unterschiedliche Werkstücke 30, 40, 60 oder in ein- und dasselbe Werkstück, beispielsweise eine Kraftfahrzeugkarosserie, mit unterschiedlich ausgebildeten Löchern, können infolgedessen Verwechslungen zwischen unterschiedlichen Schraubenarten vermieden werden, da unabhängig davon, ob ein Loch, in das eine Schraube eingeschraubt werden soll, ein Innengewinde aufweist oder nicht, immer die gleichen Schrauben 10 verwendet werden. Dadurch wird die Prozesssicherheit des Einschraubprozesses erheblich verbessert. Auch die Dokumentation des Einschraubprozesses wird erleichtert, da eben immer die gleichen Schrauben 10 verwendet werden.

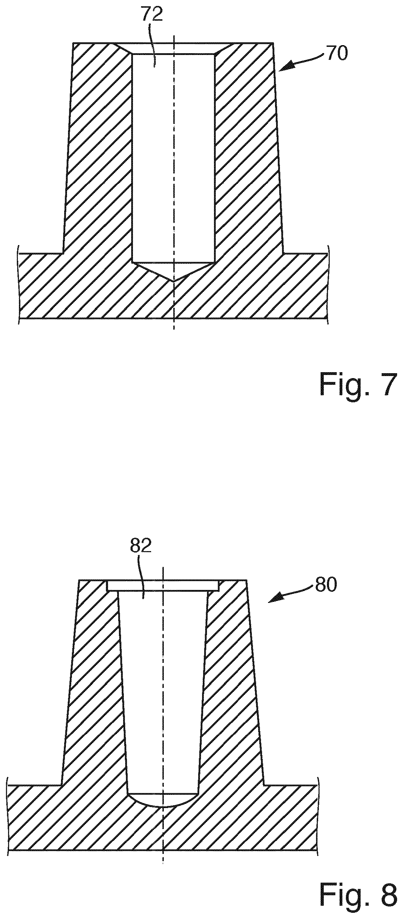

Mit dem in Fig. 6 dargestellten System 50 können die gleichen Schrauben 10 auch in die in Fig. 7 und 8 dargestellten Werkstücke 70, 80 eingeschraubt werden. Fig. 7 zeigt das Werkstück 70 mit einem gebohrten Kernloch 72, das zylindrisch ausgebildet ist. Das Kernloch 72 weist kein Innengewinde auf und die erfindungsgemäße Schraube 10 kann in das Kernloch 72 eingesetzt werden, wobei die Schraube 10 beim Eindrehen in das Kernloch 72 an der Wandung des Kernlochs 72 ein Gewinde furcht.

Das in Fig. 8 dargestellte Werkstück 80 weist ein gegossenes konisches Kernloch 82 auf. Das Kernloch 82 ist kegelstumpfförmig ausgeführt und weist infolgedessen an seinem in Fig. 8 oben dargestellten offenen Ende einen größeren Durchmesser auf als an seinem, in Fig. 8 unten dargestellten Ende.

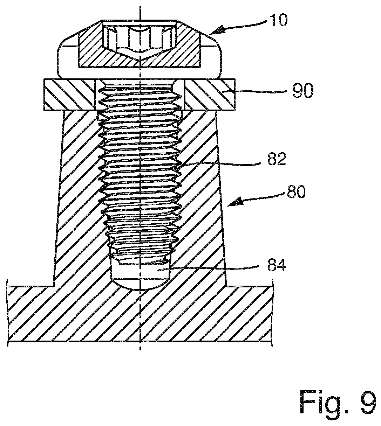

Fig. 9 zeigt die erfindungsgemäße Schraube 10 im eingeschraubten Zustand in das Kernloch 82 im Werkstück 80. Mit der Schraube 10 wurde ein weiteres Bauteil 90 auf dem Werkstück 80 befestigt. Es ist in Fig. 9 zu erkennen, dass die Schraube 10 ein Gewinde in das Kernloch 82 eingefurcht hat. Die Schraube 10 endet vor dem Grund des als Sackloch ausgebildeten Kernlochs 82, so dass zwischen dem Ende der Schraube 10 und dem Grund des Sacklochs noch ein Zwischenraum 84 vorhanden ist.

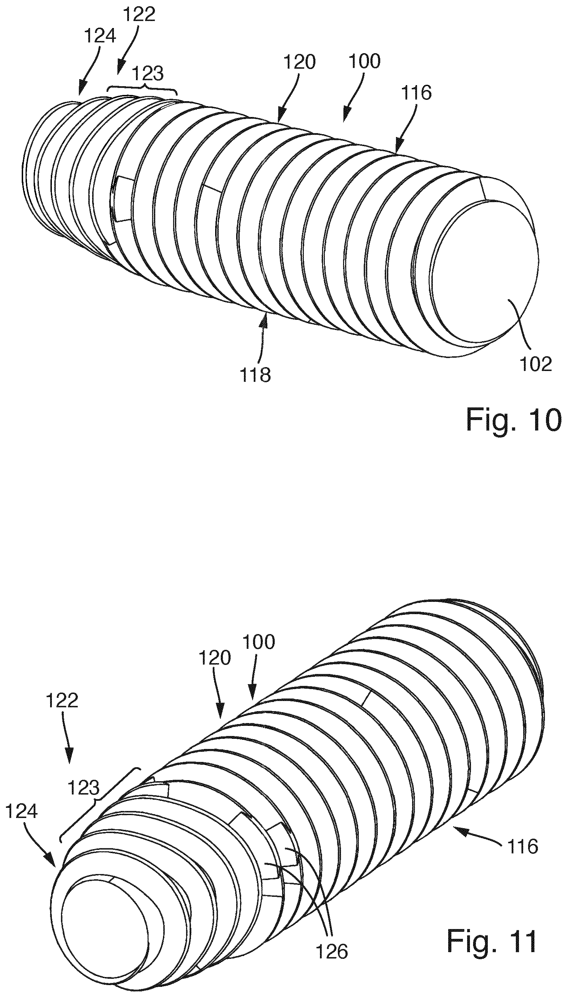

Fig. 10 zeigt in einer Ansicht von schräg hinten eine weitere erfindungsgemäße Schraube 100 in abschnittsweiser Darstellung. Die Schraube 100 weist einen nicht dargestellten Schraubenkopf mit einer Antriebsausbildung auf, beispielsweise den in Fig. 1 dargestellten Schraubenkopf 12. Der Übersichtlichkeit halber ist dieser Schraubenkopf in der Darstellung der Fig. 10 weggelassen worden. Der Schraubenkopf würde auf das in Fig. 10 dem Betrachter zugewandte Ende also auf die Schnittfläche 102 aufgesetzt werden. Auf die Schnittfläche 102 kann im Rahmen der Erfindung auch ein weiterer Abschnitt eines Schafts 116 der Schraube 100 folgen. Die Schraube 100 weist auf dem Schraubenschaft 116 über dessen gesamte Länge ein Schraubengewinde 118 auf, das in einem Halteabschnitt 120 als Normgewinde, speziell als Trapezgewinde, und in einem Endabschnitt 122 als Rundgewinde ausgebildet ist. Es ist bereits in der Ansicht der Fig. 10 zu erkennen, dass der Endabschnitt einen Furchabschnitt 123 mit polylobularem Querschnitt, speziell trilobularem Querschnitt, aufweist und am freien Ende der Schraube 120, also an dem, dem Betrachter in Fig. 10 abgewandten Ende des Endabschnitts 122, noch einen Suchabschnitt 124 mit kreisrundem Querschnitt. Auch der Halteabschnitt 120 weist einen kreisrunden Querschnitt auf. Im Furchabschnitt 123 ist ein Furchgewinde mit insgesamt vier Gewindegängen angeordnet.

Fig. 11 zeigt eine Ansicht der Schraube 100 der Fig. 10 von schräg vorne, wobei wieder der Schraubenkopf weggelassen wurde. Es ist in der Ansicht der Fig. 11 zu erkennen, dass im Suchabschnitt 124 der dort zu findenden einzige Gewindegang einen kreisrunden Querschnitt hat und als Rundgewinde ausgebildet ist. Die vier Gewindegänge im Furchabschnitt 123 sind auf einem trilobularen Querschnitt des Schafts 116 ausgebildet und sind ebenfalls als Rundgewinde ausgebildet. Im Halteabschnitt 120, der auf den Furchabschnitt 123 folgt, ist das Normgewinde, das als 60°-Trapezgewinde ausgebildet ist, wieder auf einem kreisrunden Querschnitt des Schafts 116 ausgebildet. Es ist zu erkennen, dass im Halteabschnitt 120 das Gewinde abgeplattete Gewindespitzen aufweist. Der Suchabschnitt 124 und der Furchabschnitt 123 bilden gemeinsam den Endabschnitt 122.

In der Darstellung der Fig. 11 sind am letzten Gewindegang des Furchabschnitts 123 und am ersten Gewindegang des Halteabschnitts 120 Bereiche 126 zu erkennen, in denen das Gewinde geringfügig anders ausgebildet ist. Diese Bereiche sind nicht mit abgeplatteten, sondern abgerundeten Gewindespitzen ausgeführt und dienen lediglich dazu, einen sanften Übergang des trilobularen Querschnitts des Furchgewindes 123 in das Gewinde des Halteabschnitts mit kreisrundem Querschnitt sicherzustellen.

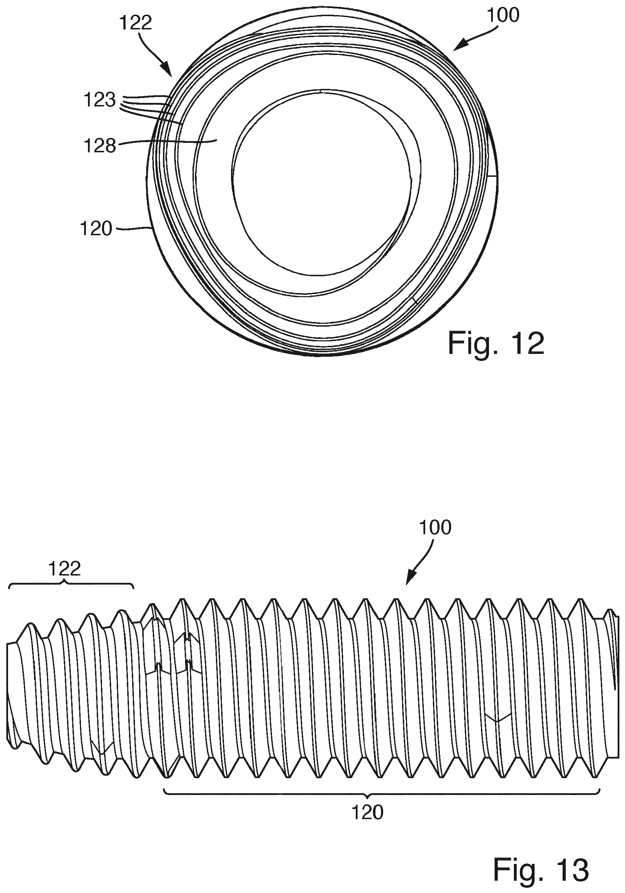

Fig. 12 zeigt die Schraube 100 der Fig. 10 in einer Ansicht von vorne, wobei wieder der Schraubenkopf weggelassen wurde. Der Blick geht in Fig. 12 auf den Endabschnitt 122. In Fig. 12 ist zu erkennen, dass der erste Gewindegang 128 des Endabschnitts 122 noch einen annähernd kreisrunden Querschnitt hat. Auf diesen ersten Gewindegang 128 folgen dann vier Gewindegänge des Furchgewindes 123 mit trilobularem Querschnitt. Hinter dem Furchgewinde 123 ist der Halteabschnitt 120 mit einem Normgewinde mit kreisrundem Querschnitt zu erkennen. Die Fig. 12 zeigt deutlich, dass das Furchgewinde 123 nicht über den Querschnitt des Haltegewindes im Halteabschnitt 120 hinausragt. Mit anderen Worten erstrecken sich auch die am weitesten radial außen liegenden Bereiche des Furchgewindes 123 nicht über die Kontur des Haltegewindes im Halteabschnitt 120 hinaus.

Fig. 13 zeigt eine Seitenansicht der Schraube 100 der Fig. 10, wobei wieder der Schraubenkopf weggelassen wurde. Gut zu erkennen ist, dass im Endabschnitt 122 das Gewinde als Rundgewinde mit abgerundeten Gewindespitzen ausgebildet ist. Im Rahmen der Erfindung können auch die Gewindetäler ausgerundet sein. Im Halteabschnitt 120 ist das Gewinde hingegen als Trapezgewinde mit abgeplatteten Gewindespitzen und abgeplatteten Gewindetälern ausgebildet.

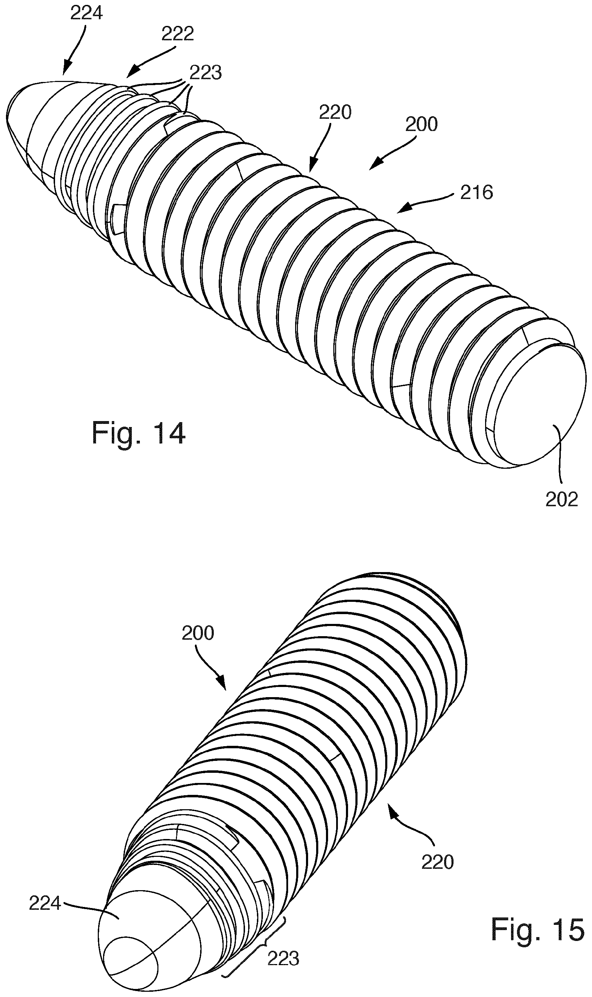

Fig. 14 zeigt eine weitere Ausführungsform einer erfindungsgemäßen Schraube 200. Die Schraube 200 weist einen Schraubenschaft 216 auf und ist lediglich abschnittsweise dargestellt. Speziell ist ein Schraubenkopf nicht dargestellt, der auf eine Schnittfläche 202 aufgesetzt würde. Der Schraubenschaft 216 kann sich auch über die Schnittfläche 202 hinaus erstrecken. Beispielsweise kann an die Schnittfläche 202 der in Fig. 1 gezeigte Schraubenkopf 12 aufgesetzt werden.

Die Schraube 200 weist einen Halteabschnitt 220 und einen Endabschnitt 222 auf. Der Endabschnitt 222 weist vier Gänge eines Furchgewindes 223 und eine gewindelose Suchspitze 224 auf. Die gewindelose Suchspitze 224 ist an ihrem freien Ende abgerundet und vergrößert ihren Durchmesser allmählich bis zum ersten Gewindegang des Furchgewindes. Die Suchspitze 224 hat einen kreisrunden Querschnitt. Im Bereich des Furchgewindes 223 hat der Schaft 216 einen trilobularen Querschnitt. Im Halteabschnitt 220 ist das Gewinde als Normgewinde und speziell als 60°-Trapezgewinde mit abgeplatteten Gewindespitzen und abgeplatteten Gewindetälern ausgebildet.

Fig. 15 zeigt die Schraube 200 der Fig. 14 in einer Ansicht von vorne. Gut zu erkennen sind der kreisrunde Querschnitt der Suchspitze 224 und der trilobulare Querschnitt des Furchgewindes 223. Weiter ist der kreisrunde Querschnitt des Gewindes im Halteabschnitt 220 zu erkennen.

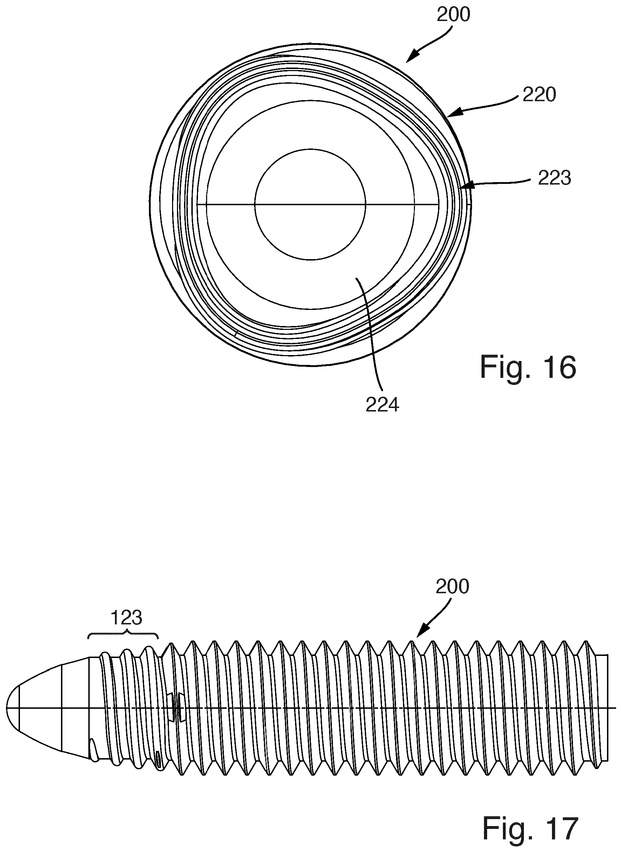

Fig. 16 zeigt die Schraube 200 in einer Ansicht von vorne, wobei der Schraubenkopf wieder weggelassen wurde. Gut zu erkennen sind der kreisrunde Querschnitt der Suchspitze 224, der trilobulare Querschnitt der Gewindegänge des Furchgewindes 223 und der kreisrunde Querschnitt des Gewindes im Halteabschnitt 220. Es ist Fig. 16 zu entnehmen, dass die Gewindegänge des Furchgewindes 223 nicht über die Kontur des Haltegewindes im Halteabschnitt 220 hinausragen.

Fig. 17 zeigt eine Seitenansicht der Schraube 200 der Fig. 14 in einer ersten Drehstellung um die Mittellängsachse. Im Bereich des Furchgewindes 123 sind die Gewindespitzen abgerundet ausgebildet. Abweichend von der Darstellung in Fig. 17 können auch die Gewindetäler abgerundet ausgebildet sein.

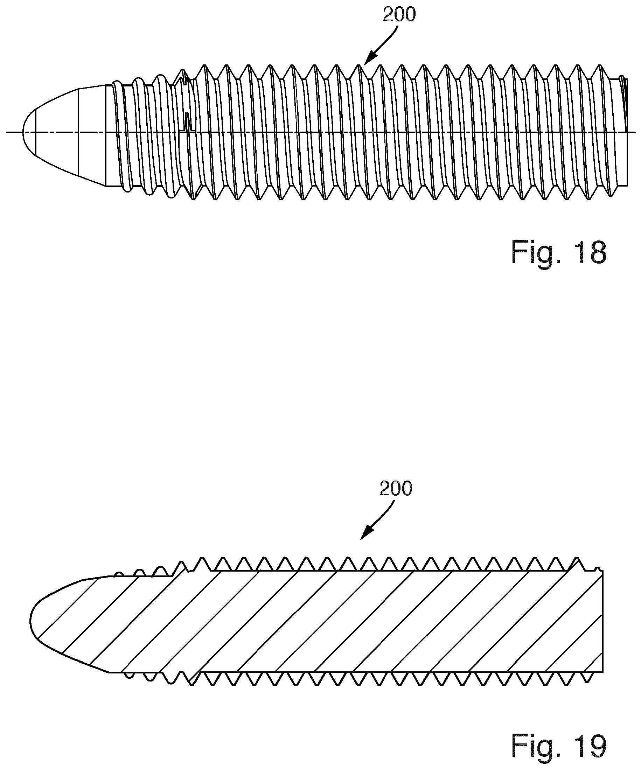

Fig. 18 zeigt eine weitere Seitenansicht der Schraube 200, wobei die Schraube gegenüber der Darstellung der Fig. 17 um 90° um die Mittellängsachse gedreht wurde.

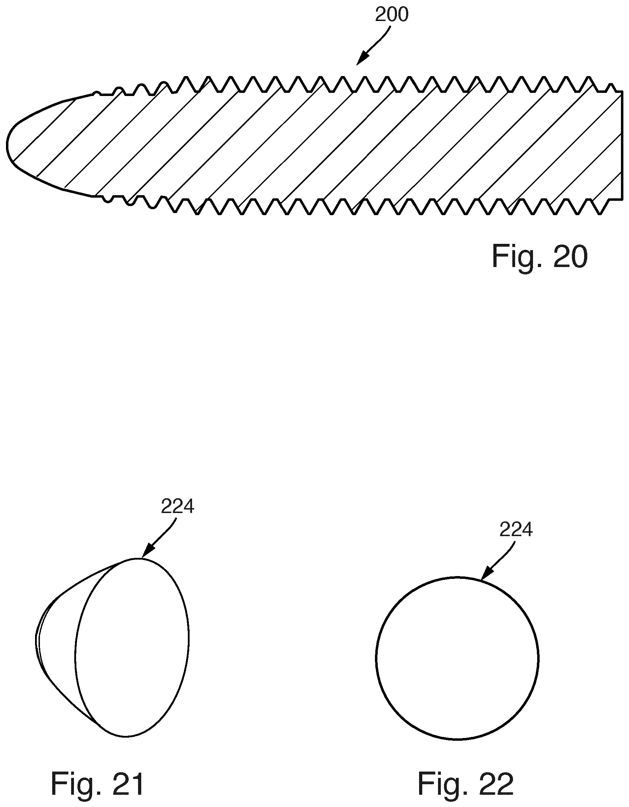

Fig. 19 zeigt eine Schnittansicht der Schraube 200 und Fig. 20 zeigt eine weitere Schnittansicht der Schraube 200, wobei die Schnittebene der Fig. 20 gegenüber der Schnittebene der Fig. 19 um 90° um die Mittellängsachse gedreht ist.

Fig. 21 zeigt eine Schnittansicht der Schraube 200 im Bereich der Suchspitze 224. Fig. 22 zeigt die Schnittansicht der Fig. 21 von vorne. Gut zu erkennen ist der kreisrunde Querschnitt der Suchspitze, die glatt und ohne Gewinde ausgebildet ist und die an ihrem freien Ende abgerundet ist.

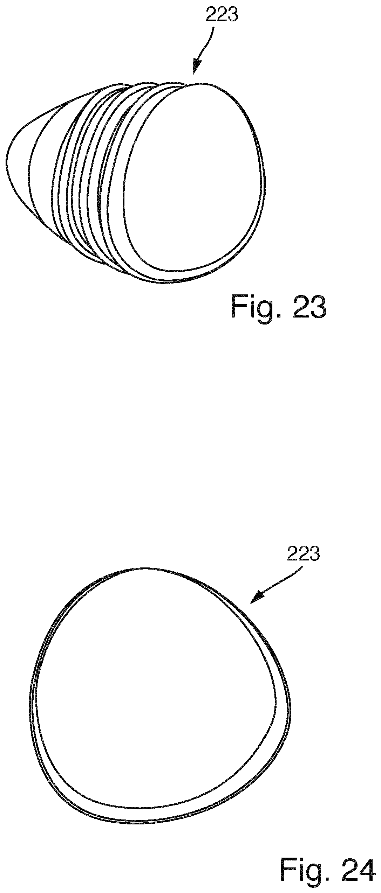

Fig. 23 zeigt eine weitere Schnittansicht der Schraube 200, wobei die Schnittebene in den Bereich des Furchgewindes 223 gelegt wurde. Gut zu erkennen ist der polylobulare Querschnitt mit drei Maxima, mit anderen Worten also ein trilobularer Querschnitt. Fig. 24 zeigt die Schnittansicht der Fig. 23 von vorne.

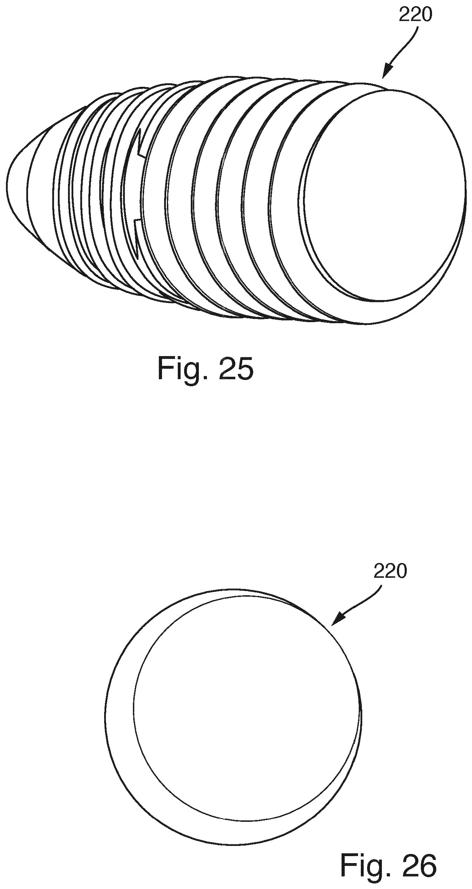

Fig. 25 zeigt eine weitere Schnittansicht der Schraube 200 im Bereich des Halteabschnitts 220. Deutlich zu erkennen ist der kreisrunde Querschnitt des Schraubenschafts im Halteabschnitt 220. Zu berücksichtigen ist auch in Fig. 26, die die Ansicht der Fig. 25 von vorne zeigt, dass die Schnittebene in Fig. 25 und Fig. 26 senkrecht zur Mittellängsachse der Schraube verläuft, die Gewindegänge des Haltegewindes hingegen eine Steigung aufweisen. Aus diesem Grund läuft die Schnittebene in Fig. 25 und Fig. 26 einerseits durch ein Gewindetal und andererseits durch eine Gewindespitze. Dies begründet die leichten Abweichungen von einer strengen Kreisform.

Die Schrauben 100 und 200 der Fig. 10 bis 26 sind im Übrigen gehärtet und weisen ein Bainit-Gefüge auf. Dadurch lässt sich eine hohe Festigkeit und vor allem eine sehr große Zähigkeit der Schraube erzielen.

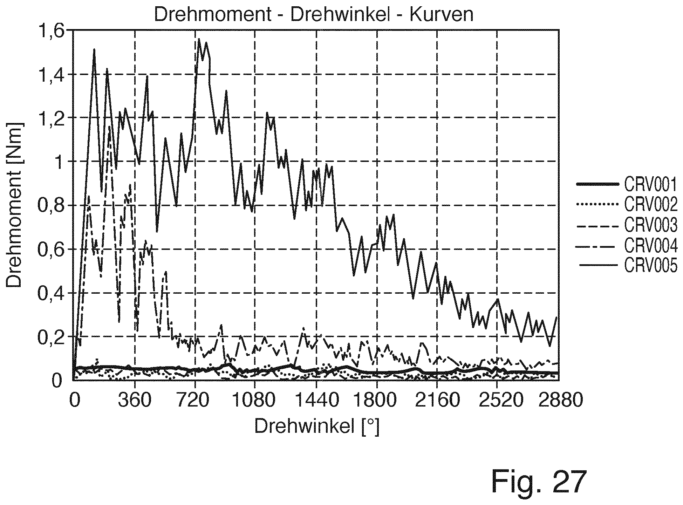

Fig. 27 zeigt beispielhaft Drehmoment-Drehwinkel-Kurven beim Einschrauben erfindungsgemäßer Schrauben in vorhandene Gewinde. Verwendet wurde dabei eine den Fig. 14 bis 26 entsprechende Schraube, selbstverständlich mit einem Schraubenkopf mit Antriebsausbildung. Die erfindungsgemäße Schraube hatte einen Durchmesser von 6 mm und im Halteabschnitt somit ein M6-Gewinde. Wie ausgeführt, liegt im Endabschnitt 122 ein Rundgewinde vor. Beim korrekten Einschrauben in ein vorhandenes M6-Mutterngewinde ergibt sich über einen Drehwinkel von mehr als 2.000° entsprechend den Kurven CRV001, CRV002 und CRV003 ein Drehmoment von nicht mehr als 0,1 Nm. Die erfindungsgemäße Schraube lässt sich somit leicht zügig in ein vorhandenes Mutterngewinde eindrehen.

Die beiden Kurven CRV0004 und CRV0005 zeigen hingegen das Einschrauben in ein M6-Mutterngewinde, wobei die Schraube bewusst schräg angesetzt wurde, um ein Cross-Threading, also das Schneiden eines zusätzlichen Gewindes zum bereits vorhandenen Mutterngewinde, zu provozieren. Es ist zu erkennen, dass das dabei erforderliche Drehmoment bereits innerhalb der ersten Drehung, also innerhalb des Drehwinkelbereichs von 0 bis 360°, auf einen Wert von deutlich mehr als 1 Nm ansteigt. Die erfindungsgemäße Schraube erfordert also dann, wenn Cross-Threading auftritt, mindestens das Zehnfache des beim korrekten Einschrauben nötigen Drehmoments. Mit der erfindungsgemäßen Schraube kann dadurch in sehr einfacher Weise detektiert werden, ob die Schraube korrekt in ein vorhandenes Gewinde eingeschraubt wurde oder ob Cross-Threading aufgetreten ist. Dies kann in einfacher Weise durch Erfassen des zum Einschrauben erforderlichen Drehmoments und des Detektierens des Überschreitens vordefinierter Drehmomentgrenzen realisiert werden. Bei den in Fig. 27 dargestellten Drehmoment-Drehwinkel-Kurven könnte ein Grenzwert beispielsweise bei 0,2 Nm gesetzt werden. Übersteigt das beim Eindrehen der erfindungsgemäßen Schraube in ein vorhandenes Gewinde erforderliche Drehmoment 0,2 Nm, liegt ein sogenanntes Cross-Threading vor. Bauteil und Schraube müssen dann begutachtet und gegebenenfalls repariert werden. Wie bereits ausgeführt wurde, liegt bei konventionellen Furchschrauben das beim Einschrauben in ein vorhandenes Mutterngewinde erforderliche Drehmoment sowohl beim korrekten Einschrauben als auch beim Auftreten von Cross-Threading im gleichen Größenordnungsbereich. Eine vergleichbare Detektierung einer nicht korrekten Verschraubung bzw. des Auftretens von Cross-Threading ist bei konventionellen Furchschrauben damit nicht möglich.

## Patentansprüche

1. Schraube (10) mit einem Schraubenkopf (12) und einem Schraubenschaft (16), wobei der Schraubenkopf mit einer Antriebsausbildung (14) und der Schraubenschaft wenigstens abschnittsweise mit einem Gewinde (18) versehen ist, wobei der Schraubenschaft einen zylindrischen Halteabschnitt (20) und einen sich zu einem Schraubenende hin verjüngenden Endabschnitt (22) aufweist, wobei im Halteabschnitt das Gewinde als Normgewinde insbesondere als metrisches Gewinde, ausgebildet ist, wobei der Halteabschnitt einen kreisrunden Querschnitt aufweist, wobei sich der Endabschnitt ausgehend vom Halteabschnitt verjüngt, wobei der Endabschnitt mit wenigstens zwei Gewindegängen versehen ist, die als Furchgewinde ausgebildet sind, wobei der Endabschnitt wenigstens im Bereich des Furchgewindes einen polylobularen Querschnitt aufweist und wobei der Schraubenschaft im Halteabschnitt und im Endabschnitt gehärtet ist, **dadurch gekennzeichnet dass** das Furchgewinde im Endabschnitt als Rundgewinde ausgebildet ist und wobei das Normgewinde im Halteabschnitt als Trapezgewinde ausgebildet ist.

2. Schraube nach Anspruch 1, **dadurch gekennzeichnet, dass** der Endabschnitt eine abgerundete Suchspitze (224) aufweist.

3. Schraube nach Anspruch 2, **dadurch gekennzeichnet, dass** die Suchspitze gewindelos ausgebildet ist.

4. Schraube nach Anspruch 2 oder 3, **dadurch gekennzeichnet, dass** die Suchspitze einen kreisrunden Querschnitt aufweist.

5. Schraube nach wenigstens einem der vorstehenden Ansprüche, **dadurch gekennzeichnet, dass** der Endabschnitt ausschließlich im Bereich des Furchgewindes einen polylobularen Querschnitt hat.

6. Schraube nach einem der vorstehenden Ansprüche, **dadurch gekennzeichnet, dass** der Endabschnitt neben dem Furchgewinde weitere Gewindegänge aufweist, die als Rundgewinde ausgebildet sind.

7. Schraube nach wenigstens einem der vorstehenden Ansprüche, **dadurch gekennzeichnet, dass** in einer Seitenansicht das Gewinde auf dem Schraubenschaft eine kontinuierliche, gedachte Hüllkurve bis zum freien Ende des Schraubenschafts aufweist.

8. Schraube nach einem der vorstehenden Ansprüche, **dadurch gekennzeichnet, dass** wenigstens der Endabschnitt zusätzlich partiell gehärtet ist.

9. Schraube nach wenigstens einem der vorstehenden Ansprüche, **dadurch gekennzeichnet, dass** eine Zugfestigkeit der Schraube wenigstens 800 N/mm², insbesondere wenigstens 1040 N/mm², beträgt.

10. Schraube nach wenigstens einem der vorstehenden Ansprüche, **dadurch gekennzeichnet, dass** eine 0,2% Dehngrenze der Schraube wenigstens 640 N/mm², insbesondere wenigstens 900 N/mm², beträgt.

11. Schraube nach wenigstens einem der vorstehenden Ansprüche, **dadurch gekennzeichnet, dass** wenigstens der letzte vollständige Gewindegang des Furchgewindes vor dem Ende des Endabschnitts am Übergang zum Halteabschnitt hinsichtlich der Gewindemaße ausgebildet ist wie das Normgewinde im Halteabschnitt.

12. Verwendung einer Schraube nach wenigstens einem der vorstehenden Ansprüche 1 bis 11 in einem ersten Verwendungsfall als gewindefurchende Schraube oder in einem zweiten Verwendungsfall als Schraube zum Eindrehen in vorhandene Innengewinde.

13. System (50) zum Eindrehen einer Schraube nach einem der vorstehenden Ansprüche 1 bis 11, umfassend eine Schraube nach einem der vorstehenden Ansprüche 1 bis 11, **gekennzeichnet durch** Mittel zum Feststellen, ob ein vorhandenes Loch ein Innengewinde aufweist oder nicht, und in Abhängigkeit davon, Einschrauben der Schraube mit unterschiedlichem maximalen Einschraubmoment.

14. Verfahren zum Eindrehen einer Schraube nach einem der vorstehenden Ansprüche 1 bis 11, **gekennzeichnet durch** Erfassen eines Einschraubmoments während des Einschraubens in ein vorhandenes Mutterngewinde und Detektieren einer nicht korrekten Verschraubung, wenn das Einschraubmoment einen vordefinierten Wert übersteigt.

## Claims

1. Screw (10) having a screw head (12) and a screw shaft (16), wherein the screw head is provided with a drive formation (14) and the screw shaft is at least partially provided with a thread (18), wherein the screw shaft has a cylindrical retention portion (20) and an end portion (22) which tapers toward a screw end, wherein in the retention portion the thread is in the form of a standard thread, in particular a metric thread, wherein the retention portion has a circular cross section, wherein the end portion tapers from the retention portion, wherein the end portion is provided with at least two thread turns which are in the form of tapping threads, wherein the end portion has a polylobulated cross section at least in the region of the tapping thread and wherein the screw shaft is hardened in the retention portion and in the end portion, **characterized in that** the tapping thread is in the form of a round thread in the end portion and wherein the standard thread is in the form of a trapezoidal thread in the retention portion.

2. Screw according to Claim 1, **characterized in that** the end portion has a rounded searching tip (224).

3. Screw according to Claim 2, **characterized in that** the searching tip is constructed without a thread.

4. Screw according to Claim 2 or 3, **characterized in that** the searching tip has a circular cross section.

5. Screw according to at least one of the preceding claims, **characterized in that** the end portion has a polylobulated cross section exclusively in the region of the tapping thread.

6. Screw according to one of the preceding claims, **characterized in that** the end portion has additional thread turns which are in the form of round threads in addition to the tapping thread.

7. Screw according to at least one of the preceding claims, **characterized in that** the thread has, when viewed from the side, on the screw shaft a continuous notional generating curve as far as the free end of the screw shaft.

8. Screw according to one of the preceding claims, **characterized in that** at least the end portion is further partially hardened.

9. Screw according to at least one of the preceding claims, **characterized in that** a tensile strength of the screw is at least 800 N/mm², in particular at least 1040 N/mm².

10. Screw according to at least one of the preceding claims, **characterized in that** a 0.2% permanent elongation limit of the screw is at least 640 N/mm², in particular at least 900 N/mm².

11. Screw according to at least one of the preceding claims, **characterized in that** at least the last complete thread turn of the tapping thread is constructed before the end of the end portion at the transition to the retention portion with respect to the thread dimensions in the same manner as the standard thread in the retention portion.

12. Use of a screw according to at least one of the preceding Claims 1 to 11 in a first application as a thread-tapping screw or in a second application as a screw for being screwed into provided internal threads.

13. System (50) for screwing in a screw according to one of the preceding Claims 1 to 11, comprising a screw according to one of the preceding Claims 1 to 11, **characterized by** means for establishing whether or not a provided hole has an internal thread, and, in accordance therewith, screwing in the screw with a different maximum screwing-in torque.

14. Method for screwing in a screw according to one of the preceding Claims 1 to 11, **characterized by** detecting a screwing-in torque during the screwing action into a provided nut thread and detecting an incorrect screwing arrangement if the screwing-in torque exceeds a predefined value.

## Revendications

1. Vis (10) avec une tête (12) de vis et une tige (16) de vis, la tête de vis étant pourvue d'une formation d'entraînement (14) et la tige de vis étant pourvue au moins par sections d'un filetage (18), la tige de vis comportant une section de maintien cylindrique (20) et une section d'extrémité (22) se rétrécissant vers une extrémité de vis, le filetage étant réalisé dans la section de maintien sous la forme d'un filetage standard, en particulier de filetage métrique, la section de maintien comportant une section transversale circulaire, la section d'extrémité se rétrécissant à partir de la section de maintien, la section d'extrémité étant pourvue d'au moins deux pas de filetage, qui sont réalisés sous la forme d'un filetage rainuré, la section d'extrémité comportant une section transversale polylobulaire au moins dans la zone du filetage rainuré et la tige de vis étant durcie dans la section de maintien et dans la section d'extrémité, **caractérisée en ce que** le filetage rainuré dans la section d'extrémité est réalisé sous la forme d'un filetage rond et le filetage standard dans la section de maintien étant réalisé sous la forme d'un filetage trapézoïdal.

2. Vis selon la revendication 1, **caractérisée en ce que** la section d'extrémité comporte une pointe de recherche arrondie (224).

3. Vis selon la revendication 2, **caractérisée en ce que** la pointe de recherche est réalisée sans filetage.

4. Vis selon la revendication 2 ou 3, **caractérisée en ce que** la pointe de recherche comporte une section transversale circulaire.

5. Vis selon au moins l'une des revendications précédentes, **caractérisée en ce que** la section d'extrémité a une section transversale polylobulaire exclusivement dans la zone du filetage rainuré.

6. Vis selon l'une des revendications précédentes, **caractérisée en ce que** la section d'extrémité comporte, en plus du filetage rainuré, d'autres pas de filetage qui sont réalisés sous la forme d'un filetage rond.

7. Vis selon au moins l'une des revendications précédentes, **caractérisée en ce que** le filetage sur la tige de vis comporte, dans une vue latérale, une courbe enveloppe imaginaire continue jusqu'à l'extrémité libre de la tige de vis.

8. Vis selon l'une des revendications précédentes, **caractérisée en ce qu'**au moins la section d'extrémité est en partie durcie en supplément.

9. Vis selon au moins l'une des revendications précédentes, **caractérisée en ce qu'**une résistance à la traction de la vis est d'au moins 800 N/mm², en particulier d'au moins 1040 N/mm².

10. Vis selon au moins l'une des revendications précédentes, **caractérisée en ce qu'**une limite d'élasticité à 0,2 % de la vis est d'au moins 640 N/mm², en particulier d'au moins 900 N/mm².

11. Vis selon au moins l'une des revendications précédentes, **caractérisée en ce qu'**au moins le dernier pas de filetage complet du filetage rainuré avant l'extrémité de la section d'extrémité sur la transition vers la section de maintien est réalisé en termes de dimensions du filetage comme le filetage standard dans la section de maintien.

12. Utilisation d'une vis selon au moins l'une des revendications précédentes 1 à 11 dans un premier cas d'application comme vis de taraudage ou dans un deuxième cas d'application comme vis à visser dans des filetages intérieurs existants.

13. Système (50) pour visser une vis selon l'une des revendications précédentes 1 à 11, comprenant une vis selon l'une des revendications précédentes 1 à 11, **caractérisé par** des moyens pour déterminer si un trou existant comporte ou non un filetage intérieur et, en fonction de ceci, pour visser la vis avec un couple de vissage maximal différent.

14. Procédé de vissage d'une vis selon l'une des revendications précédentes 1 à 11, **caractérisé par** la détection d'un couple de vissage lors du vissage dans un filetage femelle existant et la détection d'un mauvais vissage lorsque le couple de vissage dépasse une valeur prédéfinie.
